# EUROPÄISCHE PATENTSCHRIFT

(11) **EP 1 224 449 B1**
(45) Veröffentlichungstag und Bekanntmachung des Hinweises auf die Patenterteilung: **28.03.2007**
(21) Anmeldenummer: 00982970.6
(22) Anmeldetag: 07.10.2000
(51) Int. Cl.: G01M 17/04

(54) **VERFAHREN UND EINRICHTUNG ZUM ÜBERPRÜFEN VON RADAUFHÄNGUNGSKOMPONENTEN EINES FAHRZEUGES**
METHOD AND DEVICE FOR INSPECTING THE WHEEL SUSPENSION COMPONENTS OF A VEHICLE
PROCEDE ET DISPOSITIF POUR LA VERIFICATION DE COMPOSANTES DE SUSPENSION DE ROUE D'UN VEHICULE

(30) Priorität: 16.10.1999 DE 19949982
(43) Veröffentlichungstag der Anmeldung: 24.07.2002
(73) Patentinhaber: ROBERT BOSCH GMBH, 70442 Stuttgart (DE)
(72) Erfinder: ANLAUF, Juergen, 73035 Goeppingen (DE); NOBIS, Guenter, 73240 Wendlingen (DE)
(86) Internationale Anmeldenummer: PCT/DE2000/003530
(87) Internationale Veröffentlichungsnummer: WO 2001/031310

(56) Entgegenhaltungen:
- EP-A- 0 483 016
- DE-A- 4 431 794
- DE-A- 19 637 432
- US-A- 5 295 073
- US-A- 5 767 382

## Beschreibung

### Stand der Technik

Die Erfindung bezieht sich auf ein Verfahren zum Überprüfen von in einem Fahrzeug eingebauten Stoßdämpfern, Radaufhängungsfederungen und/oder Reifendrücken während der Fahrt auf einem Prüfplatzboden unter vertikaler Auslenkung mindestens eines Rades, wobei zumindest Vertikalbewegungen des mindestens einen Rades und der Karosserie erfasst werden, und auf eine entsprechende Einrichtung.

Ein derartiges Verfahren bzw. eine derartige Einrichtung ist in der DE 43 40 746 A1 angegeben. In dieser Druckschrift ist beschrieben, Zustände von Radaufhängungskomponenten, wie Stoßdämpfer, Federung und Reifenluftdruck auf der Grundlage von Modellgleichungen mit einem Störungsvektor während der Fahrt auf einer Straße zu ermitteln, wobei ein in dem System vorhandener interner Störungsvektor und ein von der Straßenoberfläche aus wirkender externer Störungsvektor unterschieden werden. Die Auswertung erfolgt mittels verschiedener an dem Fahrzeug angeordneter Messaufnehmer und eines umfangreichen Gleichungssystems. Für eine Untersuchung in einer Werkstatt ist diese Einrichtung und Vorgehensweise zu aufwendig.

Bei einem in der DE 44 31 794 A1 angegebenen weiteren Verfahren und einer Vorrichtung zur Bestimmung der Eigenschaften der in einem Fahrzeug eingebauten Stoßdämpfer wird eine Fallanregung vorgeschlagen, wozu auf dem Prüfplatz ortsfest eine Auffahrhalterung vorgesehen ist, die schnell entfernt werden kann, so dass das Kraftfahrzeug auf eine Unterlage fällt. Dabei wird die auf die Unterlage wirkende Radaufstandskraft mit entsprechenden Sensoren ermittelt, wozu u.a. auch ein Bildverarbeitungssystem, an der Karosserie ein Balkenmuster und an dem betreffenden Rad ein rotationssymmetrisches Muster mit Schwarz-Weiß-Übergängen vorgesehen sind. Auch diese Vorrichtung mit der Messeinrichtung für die Radaufstandskräfte ist relativ aufwendig, um sie z.B. in einer Werkstatt anzuwenden.

In der DE 197 57 760 A1 ist eine Vorrichtung zum Bestimmen der Rad- und/oder Achsgeometrie von Kraftfahrzeugen gezeigt, mit der mittels einer Bildaufnahmeeinrichtung während der Vorbeifahrt die Radebene eines betreffenden Rades zur Bestimmung der Rad- und/oder Achsgeometrie festgestellt wird. Die Bildaufnahmeeinrichtung umfasst mindestens zwei Bildaufnehmer, insbesondere Kameras, die aus zumindest zwei unterschiedlichen Perspektiven eine Bezugsmerkmalsanordnung, mindestens ein Karosseriemerkmal und mindestens ein Radmerkmal aufnimmt. Die Überprüfung von Radaufhängungskomponenten, wie Stoßdämpfer, Radaufhängungsfederung und Reifendruck ist in dieser Druckschrift nicht angegeben.

Der Erfindung liegt die Aufgabe zugrunde, ein Verfahren bzw. eine Einrichtung der eingangs angegebenen Art bereit zu stellen, mit dem bzw. der mit wenig Aufwand beispielsweise auch in einer Werkstatt Radaufhängungskomponenten einschließlich des Reifendrucks überprüft werden können.

Diese Aufgabe wird mit den Merkmalen des Anspruches 1 bzw. 11 gelöst. Bei dem Verfahren ist vorgesehen, dass gleichzeitig Bilddaten eines Abschnittes des Prüfplatzbodens, des Rades und zumindest eines Teils der Karosserie in so kurz aufeinander folgenden Zeitpunkten erfasst werden, dass die Vertikalbewegungen des Rades und der Karosserie aufgelöst werden, dass die Vertikalbewegung des Rades aus den Bilddaten bestimmt wird und dass zum einen aus der Vertikalbewegung des Rades bzw. der Radachse relativ zum Prüfplatzboden auf den Reifendruck und/oder zum anderen aus der ermittelten Relativbewegung der Karosserie bezüglich des Rades oder des Prüfplatzbodens auf den Zustand des Stoßdämpfers und/oder der Radaufhängungsfederung geschlossen wird.

Bei der Einrichtung ist vorgesehen, dass die Messeinrichtung eine optische Messvorrichtung mit mindestens einer zumindest während der Messung ortsfest bezüglich des Prüfplatzes positionierten Bildaufnahmevorrichtung aufweist, mit der gleichzeitig eine Radbewegung, mindestens ein Karosserieabschnitt mit einer Karosseriemerkmalsanordnung und ein Abschnitt des Prüfplatzbodens zu mehreren Messzeitpunkten erfassbar sind, dass der Prüfplatzboden in dem erfassten Abschnitt mit mindestens einem Vertikal-Auslenkelement für mindestens ein Fahrzeugrad versehen ist und dass die Messzeitpunkte so eng zusammen liegen, dass während einer Vertikalauslenkung mehrere Bildaufnahmen zur Erfassung der Radbewegung und der Karosseriebewegung stattfinden. Der Begriff "Bewegung" wird dabei zusammenfassend für Auslenkung, Geschwindigkeit und Beschleunigung verwendet. Die Bewegungsgrößen werden optisch bis auf einen unbekannten Abbildungsmaßstab erfaßt. Für Auswertungen, die Bewegungsgrößen ins Verhältnis setzen, ist diese Art der Erfassung völlig ausreichend. Sind absolute Angaben über Bewegungsgrößen zu machen, so muss der Prüfplatz eine Referenzstrecke aufweisen. Beispielsweise kann der optisch erfaßte Abschnitt des Prüfplatzbodens eine Bezugsmerkmalsanordnung mit einer Strecke bekannter Länge aufweisen.

Mit diesen Maßnahmen kann mit wenig Aufwand ein Prüfplatz zum Testen der Radaufhängungskomponenten eingerichtet und die Prüfung der Radaufhängungskomponenten einfach vorgenommen werden. Auf dem Prüfplatz sind lediglich die z.B. mobile Bildaufnahmevorrichtung und die Vertikalauslenkelemente, z.B. einfache Schwellen, vorzusehen. Sodann kann mittels der Messeinrichtung, insbesondere einer der Bildaufnahmevorrichtung nachgeschalteten Auswerteeinrichtung, die Prüfung aufgrund der erfassten Bewegungsdaten mittels an sich bekannter Auswertemethoden vorgenommen werden. Als Karosseriemerkmale und Radmerkmale können markante Stellen der Karosserie und des Rades oder aber auch gesondert aufgebrachte Marken verwendet werden. Eine aufwendige Anbringung von Messaufnehmern an dem Fahrzeug und auch auf dem Prüfplatz erübrigt sich.

Vorteilhafte Ausgestaltungen der Erfindung sind in den Unteransprüche 2 bis 10 bzw. 12 bis 16 angegeben.

Eine einfache Auswertung ergibt sich dabei dadurch, dass zum Schließen auf den Reifendruck einerseits und/oder auf den Zustand des Stoßdämpfers und/oder der Radaufhängungsfederung andererseits die Bewegungsdaten des mindestens einen Rades und der Karosserie mit den Auslenkungen durch den Prüfplatzboden in Beziehung gesetzt werden. Zwei verschiedene Vorgehensweisen bestehen darin, dass die Auslenkungen durch den Prüfplatzboden der Messeinrichtung bekannt sind und in Abhängigkeit von der erfassten, zurückgelegten Fahrstrecke des Fahrzeuges oder auf der Grundlage der erfassten Bilddaten festgestellt werden und zur Verrechnung mit den Bewegungsdaten verwendet werden.

Die Bewegungsdaten des jeweiligen Rades können durch die Erfassung mindestens eines beliebig in einer Drehebene des Rades gelegenen Radmerkmals gewonnen werden. Zur Verbesserung der Ermittlung der Radbewegung aus der Bahnkurve des mindestens einen Radmerkmales kann zusätzlich die Bahnkurve eines Karosseriemerkmals verwendet werden. Eine vorteilhafte Maßnahme besteht weiterhin darin, dass der jeweilige Radmittelpunkt bzw. die Lage der Radachse aus der oder den Drehebenen mindestens eines an dem Rad angebrachten Radmerkmals bestimmt wird. Sind mehrere Radmerkmale vorgesehen, so kann aus deren gemeinsamer Auswertung der Radmittelpunkt noch genauer festgestellt werden.

Eine Methode zur Beurteilung des Zustandes von Stoßdämpfer und Radaufhängungsfederung besteht in der Bestimmung der Übertragungsfunktion, indem man den Quotienten der Laplacetransformierten von Karosseriebewegung und Radbewegung bildet.

Eine geeignete Auswertung zur Berücksichtigung von Nichtlinearitäten von Stoßdämpfern und Federung und Nichtberücksichtigung der Radaufstandskraft wird dadurch erzielt, dass der Zustand der Stoßdämpfer und/oder der Radaufhängungsfederung mit Hilfe des logarithmischen Dekrements bestimmt wird.

Verschiedene Auswertemöglichkeiten werden weiterhin dadurch ermöglicht, dass mittels Auslegung des Prüfplatzbodens die Vertikalauslenkung breitbandig (z.B. Stoß- oder stochastische Anregung) oder schmalbandig (periodisch) erfolgt.

Entsprechende Vorteile der Einrichtung ergeben sich bei den Ausgestaltungen gemäß den Unteransprüchen 12 bis 16.

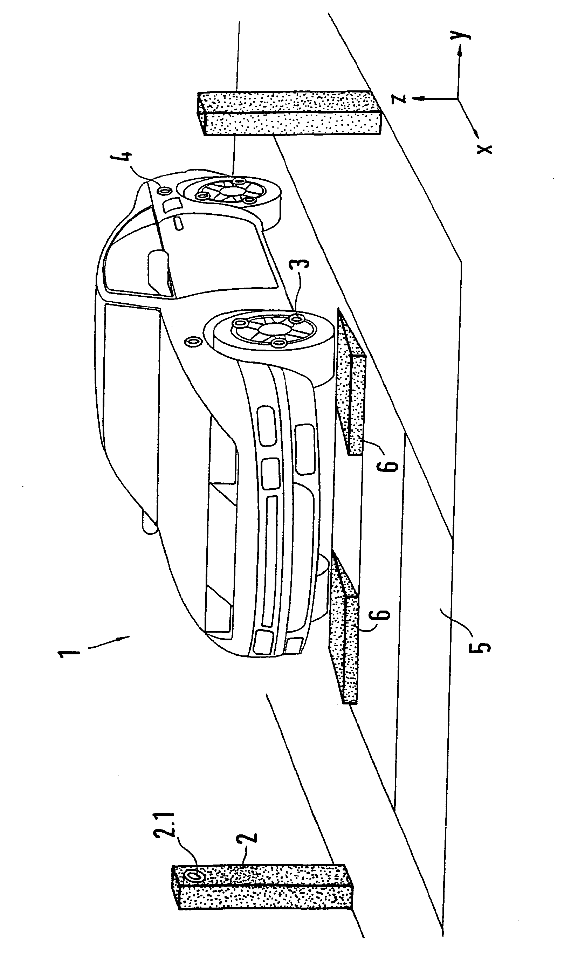

Die Erfindung wird nachfolgend anhand eines Ausführungsbeispiels unter Bezugnahme auf die Zeichnung näher erläutert.

Die Fig. zeigt einen Prüfplatz mit einer Einrichtung 1 zum Testen von Radaufhängungskomponenten einschließlich des Reifendruckes. Auf dem Prüfplatzboden 6 sind beispielsweise zwei seitlich entsprechend den Rädern einer Achse nebeneinander liegende Vertikalauslenkelemente 6 in Form von Schwellen mit einer Auffahrschräge und einem anschließenden vertikalen Absatz definierter Höhe aufgelegt. Jedes zu einer zu vermessenden Radaufhängung gehörende Rad ist mit z.B. drei Radmerkmalen 3 versehen, während an der Fahrzeugkarosserie vorzugsweise in der Nähe der Räder beispielsweise ein Karosseriemerkmal 4 angebracht ist. Anstelle der Radmerkmale 3 und der Karosseriemerkmale 4 können auch charakteristische Stellen des Rades bzw. der Fahrzeugkarosserie als Merkmale dienen. Die Radmerkmale 3 und das mindestens eine Karosseriemerkmal 4 liegen in einem Aufnahmebereich von beidseitig entsprechend aufgestellten Bildaufnahrnevorrichtungen 2, die bei ein- oder zweidimensionaler Bilderfassung mindestens einen, bei dreidimensionaler Bilderfassung mindestens zwei Bildaufnehmer 2.1, insbesondere Kameras, an verschiedenen Stellen zur Aufnahme der Merkmale aus verschiedenen Perspektiven aufweisen.

Zur jeweiligen Berechnung werden bekannte trigonometrische Beziehungen verwendet. Nähere Angaben sind beispielsweise der eingangs erwähnten DE 197 57 760 A1 zu entnehmen. Aus den in relativ kurzen zeitlichen Abständen aufeinander folgenden Bildaufnahmezeitpunkten können die Bewegung der Radmerkmale 3 und de Karosseriemerkmale 4 bezüglich des Prüfplatzes bestimmt werden.

Aus den ermittelten Bewegungen des Rades und der Karosserie kann anschlie-ßend die Relativbewegung zwischen Rad und Karosserie bestimmt werden. Je nach Bewegungsrichtung der Karosserie in Bezug auf das Rad kann eine Zug- und Druckphase unterschieden werden.

Mittels entsprechender Vertikalauslenkelemente 6 kann das zu prüfende Fahrzeug zum Schwingen auf der Hindernisstrecke des Prüfplatzes angeregt werden, wobei die Bewegungen der Räder und der Karosserie bezüglich mindestens einer, vorzugsweise zweier, im allgemeinsten Fall auch aller drei Raumachsen mit der Bildaufnahmevorrichtung 2 festgestellt werden. Die in erster Linie interessierenden Nutzsignale sind dabei die Bewegungsgrößen in der Vertikalen, die hier als z-Richtung bezeichnet werden soll. Die Strecke in x-Richtung (Geradeausfahrt) kann ebenfalls ausgewertet werden. In Bezug auf einen Startpunkt gibt sie Auskunft über die lokale Beschaffenheit des Bodenprofils, da die lokale Bodenhöhe z eine Funktion der zurückgelegten Fahrstrecke x ist.

Es lässt sich auch die Fahrgeschwindigkeit vₓ = dx/dt und darüber die Vertikalauslenkung z als Funktion der Zeit oder der Fahrstrecke x angeben. Die Bewegung in y-Richtung (quer zur Geradeausfahrt) kann z.B. erfasst werden, damit sie erforderlichenfalls rechnerisch eliminiert werden kann oder Anlass zu einer Messwiederholung gibt.

Die Beschaffenheit der Hindernisstrecke des Prüfplatzbodens 5 ist prinzipiell beliebig. Für eine breitbandige Anregung ist beispielsweise ein sprunghafter Anstieg oder eine sprunghafte Absenkung oder beides in kurzer Folge hintereinander vorzusehen. Das Gesamtfahrzeug kann angeregt werden, indem es radweise, achsenweise, seitenweise, diagonal oder mit allen vier Rädern gleichzeitig über Hindernisse fährt, wobei die Bewegungsgrößen in jedem der genannten Fälle an einem, mehreren oder allen Rädern und den jeweils darüber liegenden Karosseriepunkten erfasst werden können.

Die Auswertung der Messgrößen an Rad und Karosserie liefert in erster Linie Aussagen über Stoßdämpfer und Aufhängungsfederung der Radaufhängung. Dabei kann der Einfluss der Reifen eliminiert werden, indem die Radbewegung als Anregung und die Karosseriebewegung als Reaktion angesehen wird. Anschlie-ßend können durch Analyse der Reifenreaktion auf das mit den Vertikalauslenkelementen 6 gebildete Hindernisprofil und die Radlastveränderung die Reifenfedereigenschaften und damit der Reifendruck bestimmt werden.

Durch Auswertung der Meßgrößen des jeweiligen Rades in einem ersten Zeitabschnitt unmittelbar nach erfolgter Anregung kann, da die Radmasse bedeutend kleiner ist als der auf das Rad wirkende Anteil der Karosseriemasse, eine Aussage zum Reifendruck des betreffenden Rades gewonnen und durch eine vergleichende Auswertung der Meßgrößen der Räder untereinander verbessert werden.

Mit der beschriebenen Einrichtung kann die Prüfung der Radaufhängung und/oder des Reifendruckes eines Fahrzeuges mit wenig Aufwand vorgenommen werden.

## Patentansprüche

1. Verfahren zum Überprüfen von in einem Fahrzeug eingebauten Stoßdämpfern, Radaufhängungsfederungen und/oder Reifendrücken während der Fahrt auf einem Prüfplatzboden unter vertikaler Auslenkung mindestens eines Rades, bei dem zumindest Vertikalbewegungen des mindestens einen Rades und der Karosserie erfasst werden,
**dadurch gekennzeichnet,**
**dass** während der Fahrt über eine auf dem Prüfplatzboden mit Vertikalauslankelementen (6) versehene Hindemisstrecke gleichzeitig Bilddaten entweder eines Abschnittes des Prüfplatzbodens (5) und des Rades oder eines Abschnittes des Prüfplatzbodens und zumindest eines Teils der Karosserie oder des Rades und zumindest eines Teils der Karosserie oder aller drei Objekte in so kurz aufeinander folgenden Zeitpunkten erfasst werden, dass die Vertikalbewegungen der Karosserie und/oder des Rades aufgelöst werden,
**dass** die Vertikalbewegung des Rades und/oder der Karosserie aus den Bilddaten bestimmt wird und
**dass** zum einen aus der Bewegung des Rades auf den Reifendruck und/oder zum anderen aus der Bewegung der Karosserie oder aus der ermittelten Relativbewegung der Karosserie bezüglich des Rades auf den Zustand des Stoßdämpfers und/oder der Radaufhängungsfederung geschlossen wird.

2. Verfahren nach Anspruch 1,
**dadurch gekennzeichnet,**
**dass** zum Schließen auf den Reifendruck einerseits und/oder auf den Zustand des Stoßdämpfers und/oder der Radaufhängungsfederung andererseits die Bewegungsdaten des mindestens einen Rades und der Karosserie mit den Auslenkungen durch den Prüfplatzboden in Beziehung gesetzt werden.

3. Verfahren nach Anspruch 2,
**dadurch gekennzeichnet,**
**dass** die Auslenkungen durch den Prüfplatzboden der Messeinrichtung bekannt sind und in Abhängigkeit von der erfassten, zurückgelegten Fahrstrecke des Fahrzeuges oder auf der Grundlage der erfassten Bilddaten festgestellt werden und zur Verrechnung mit den Bewegungsdaten verwendet werden.

4. Verfahren nach einem der vorhergehenden Ansprüche,
**dadurch gekennzeichnet,**
**dass** der Zustand der Stoßdämpfer und/oder der Radaufhängungsfederung mit Hilfe des logarithmischen Dekrementes bestimmt wird.

5. Verfahren nach einem der vorhergehenden Ansprüche,
**dadurch gekennzeichnet,**
**dass** mittels Auslegung des Prüfplatzbodens die Vertikalauslenkung breitbandig (z.B. Stoß- oder stochastische Anregung) oder schmalbandig (periodisch) erfolgt.

6. Verfahren nach einem der vorhergehenden Ansprüche,
**dadurch gekennzeichnet,**
**dass** sich die Auswertung der Bewegungsdaten auf relative und/oder absolute Bewegungen stützt.

7. Verfahren nach einem der vorhergehenden Ansprüche,
**dadurch gekennzeichnet,**
**dass** für den Fall der Erfassung absoluter Bewegungen ein dem Messsystem bekannter Maßstab mit erfasst wird.

8. Verfahren nach einem der vorhergehenden Ansprüche,
**dadurch gekennzeichnet,**
**dass** je nach Bewegungsrichtung der Karosserie relativ zum Rad eine Zug- und Druckphase unterschieden wird.

9. Verfahren nach einem der vorhergehenden Ansprüche,
**dadurch gekennzeichnet,**
**dass** durch die Auswertung der Bewegungsdaten des Rades/der Räder in einem ersten Zeitabschnitt unmittelbar nach erfolgter Anregung eine Aussage zum Reifendruck gewonnen und durch eine vergleichende Auswertung der Räder untereinander die Aussage zum einzelnen Rad weiter verbessert wird.

10. Verfahren nach einem der vorhergehenden Ansprüche,
**dadurch gekennzeichnet,**
**dass** der Zustand der Stoßdämpfer und/oder der Radaufhängungsfederung mit Hilfe einer Übertragungsfunktion bestimmt wird, die sich aus dem Quotienten der Laplacetransformierten von Karosserie- und Radbewegung berechnet.

11. Einrichtung zum Überprüfen von in einem Fahrzeug eingebauten Stoßdämpfern, Radaufhängungsfedem und/oder Reifendrücken während der Fahrt auf einem mit Vertikalauslenkelementen (6) versehenen Prüfplatzboden (5) mit einer Messeinrichtung,
**dadurch gekennzeichnet,**
**dass** die Messeinrichtung eine optische Messvorrichtung mit mindestens einer zumindest während der Messung ortsfest bezüglich des Prüfplatzes positionierten Bildaufnahmevorrichtung (2) aufweist, mit der gleichzeitig eine Radbewegung, mindestens ein Karosserieabschnitt mit einer Karosseriemerkmalsanordnung (4) und ein Abschnitt des Prüfplatzbodens (5) zu mehreren Messzeitpunkten während der Fahrt des Fahrzeugs Ober den Prüfplatzboden erfassbar sind,
**dass** der Prüfplatzboden (5) in dem erfassten Abschnitt mit mindestens einem Vertikal-Auslenkelement (6) für mindestens ein Fahrzeugrad versehen ist und
**dass** die Messzeitpunkte so eng zusammen liegen, dass während einer Vertikalauslenkung mehrere Bildaufnahmen zur Erfassung der Radbewegung und der Karvsseriebewegung stattfinden.

12. Einrichtung nach Anspruch 7,
**dadurch gekennzeichnet,**
**dass** an dem Rad mindestens ein Radmerkmal (3) angebracht ist und
**dass** die jeweilige Radbewegung mittels der Messeinrichtung aus den Bahnkurven des mindestens einen Radmerkmales bestimmbar ist.

13. Einrichtung nach Anspruch 7 oder 8,
**dadurch gekennzeichnet,**
**dass** die Vertikalauslenkelemente (6) auf dem Prüfplatzboden (5) so ausgebildet und verteilt sind, dass eine schmalbandige Vertikalauslenkung eines Rades, beider Räder einer Achse oder aller vier Räder erfolgt.

14. Einrichtung nach Anspruch 7 oder 8,
**dadurch gekennzeichnet,**
**dass** die Vertikalauslenkelemente (6) auf dem Prüfplatzboden (5) so ausgebildet und verteilt sind, dass eine breitbandige Vertikalauslenkung eines Rades, beider Räder einer Achse oder aller vier Räder erfolgt.

15. Einrichtung nach einem der Ansprüche 7 bis 10,
**dadurch gekennzeichnet,**
**dass** die Anordnung der Vertikalauslenkelemente (6) auf dem Prüfplatzboden (5) in der Messeinrichtung gespeichert ist und die zugehörigen Daten entsprechend der aufgrund der Karosseriemerkmale (4) oder Radmerkmale (3) erfassten zurückgelegten Fahrstrecke zur Zuordnung der jeweiligen Vertikalauslenkung zu der vertikalen Radbewegung und/oder der vertikalen Karosseriebewegung auslesbar sind.

16. Einrichtung nach einem der Ansprüche 7 bis 10,
**dadurch gekennzeichnet,**
**dass** die Anordnung der Vertikalauslenkelemente (6) auf dem Prüfplatzboden (5) und die dadurch bewirkte Vertikalauslenkung während der Vorbeifahrt aus den mittels der Bildaufnahmevorrichtung (2) aufgenommenen Bilddaten erfasst werden und die Zuordnung der jeweiligen Vertikalauslenkung zu der vertikalen Radachsbewegung und/oder vertikalen Karosseriebewegung auf der Grundlage der erfassten Bilddaten erfolgt.

## Claims

1. Method for checking shock absorbers, wheel suspension systems and/or tyre pressures installed in a vehicle, while travelling on a test stand floor under vertical deflection of at least one wheel, in which at least vertical movements of the at least one wheel and the bodywork are sensed, **characterized in that** while travelling image data either relating to a section of the test stand floor (5) and the wheel or a section of the test stand floor and at least one part of the bodywork or of the wheel and at least part of the bodywork or all three objects are sensed simultaneously at times which follow one another in such close succession that the vertical movements of the bodywork and/or of the wheel are resolved by means of an obstacle route which is provided on the test stand floor with vertical deflection elements (6), **in that** the vertical movement of the wheel and/or of the bodywork is determined from the image data and **in that**, on the one hand the tyre pressure is inferred from the movement of the wheel and/or on the other hand, the state of the shock absorber and/or the wheel suspension system is inferred from the movement of the bodywork or from the determined relative movement of the bodywork with respect to the wheel.

2. Method according to Claim 1, **characterized in that**, in order to infer the tyre pressure on the one hand and/or the state of the shock absorber and/or the wheel suspension system on the other, the movement data of the at least one wheel and the bodywork are placed in a relationship with the deflections resulting from the test stand floor.

3. Method according to Claim 2, **characterized in that** the deflections resulting from the test stand floor of the measuring device are known and are sensed as a function of the sensed distance covered by the vehicle or on the basis of the acquired image data and are used for offsetting against the movement data.

4. Method according to one of the preceding claims, **characterized in that** the state of the shock absorbers and/or the wheel suspension system are determined using the logarithmic decrement.

5. Method according to one of the preceding claims, **characterized in that** the vertical deflection is effected in a broadband fashion (for example impulse-type or stochastic excitation) or in the narrowband fashion (periodically) by means of the configuration of the test stand floor.

6. Method according to one of the preceding claims, **characterized in that** the evaluation of the movement data is supported on relative and/or absolute movements.

7. Method according to one of the preceding claims, **characterized in that** when absolute movements are sensed a scale which is known to the measuring system is also acquired.

8. Method according to one of the preceding claims, **characterized in that** an extension phase and a compression phase are differentiated depending on the direction of movement of the bodywork relative to the wheel.

9. Method according to one of the preceding claims, **characterized in that** conclusive information about the tyre pressure is acquired by evaluation of the movement data of the wheel/wheels in a first time step directly after the excitation has occurred, and, the conclusive information relating to the individual wheel is improved further by comparative evaluation of the wheels with respect to one another.

10. Method according to one of the preceding claims, **characterized in that**, the state of the shock absorbers and/or the wheel suspension system is determined using a transmission function which is calculated on the basis of the quotient of the Laplace transformed of the bodywork movement and wheel movement.

11. Device for checking shock absorbers, wheel suspension springs and/or tyre pressures using a measuring device while travelling on a test stand floor (5) which is provided with vertical deflection elements (6), **characterized in that** the measuring device has an optical measuring device with at least one image recording device (2) which is positioned fixedly with respect to the test stand at least during the measurement and with which a wheel movement, at least one bodywork section with a bodywork feature arrangement (4) and a section of the test stand floor (5) can be sensed simultaneously at a plurality of measuring times while the vehicle is travelling over the test stand floor,
**in that** the test stand floor (5) is provided in the sensed section with at least one vertical deflection element (6) for at least one vehicle wheel, and **in that** the measuring times are so close together that a plurality of image recordings for sensing the wheel movement and the bodywork movement take place during the vertical deflection.

12. Device according to Claim 7, **characterized in that** at least one wheel feature (3) is attached to the wheel and **in that** the respective wheel movement can be determined from the trajectories of the at least one wheel feature by means of the measuring device.

13. Device according to Claim 7 or 8, **characterized in that** the vertical deflection elements (6) are formed on the test stand floor (5) and are distributed in such a way that a narrowband vertical deflection of a wheel, of both wheels of an axle or of all four wheels takes place.

14. Device according to Claim 7 or 8, **characterized in that** the vertical deflection elements (6) are formed on the test stand floor (5) and distributed in such a way that a broadband vertical deflection of a wheel, of both wheels of an axle or of all four wheels takes place.

15. Device according to one of Claims 7 to 10, **characterized in that** the arrangement of the vertical deflection elements (6) on the test stand floor (5) is stored in the measuring device and the associated data corresponding to the distance covered which is sensed on the basis of the bodywork features (4) or wheel features (3) can be read out in order to assign the respective vertical deflection to the vertical wheel movement and/or the vertical bodywork movement.

16. Device according to one of Claims 7 to 10, **characterized in that** the arrangement of the vertical deflection elements (6) on the test stand floor (5) and the vertical deflection which is brought about thereby while travelling past are determined from the image data recorded by means of the image recording device (2), and the assignment of the respective vertical deflection to the vertical wheel axle movement and/or vertical bodywork movement is made on the basis of the acquired image data.

## Revendications

1. Procédé de vérification d'amortisseurs montés sur un véhicule, de ressorts de suspension de roue et/ou de pressions de pneumatiques pendant le passage sur le sol d'une aire de contrôle, avec déplacement vertical d'au moins une roue et saisie d'au moins les mouvements verticaux d'au moins une roue et de la carrosserie,
**caractérisé en ce que**
- pendant la circulation sur un parcours d'obstacles prévu sur le sol de l'aire de contrôle et équipé d'éléments de déviation verticale (6), on saisit en même temps les données d'image soit d'une partie du sol de l'aire de contrôle (5) et de la roue, soit d'une partie du sol de l'aire de contrôle et d'au moins une partie de la carrosserie, soit de la roue et d'au moins une partie de la carrosserie, ou de ces trois objets, à des instants successifs suffisamment rapprochés pour que les mouvements verticaux de la carrosserie et/ou de la roue soient restitués,
- on définit le déplacement vertical de la roue et/ou de la carrosserie à partir des données d'image, et
- on déduit d'une part du déplacement de la roue la pression du pneumatique, et/ou d'autre part du déplacement de la carrosserie ou du déplacement relatif de celle-ci par rapport à la roue, l'état de l'amortisseur et/ou des ressorts de suspension de roue.

2. Procédé selon la revendication 1,
**caractérisé en ce que**
pour déduire d'une part la pression de pneumatique et d'autre part l'état de l'amortisseur et/ou des ressorts de suspension de roue, les données de déplacement d'au moins une roue et de la carrosserie sont mises en corrélation avec les déviations produites par le sol de l'aire de contrôle.

3. Procédé selon la revendication 2,
**caractérisé en ce que**
les déviations produites par le sol de l'aire de contrôle sont connues du dispositif de mesure et en fonction du parcours saisi effectué par le véhicule ou sur la base des données d'image saisies, elles sont utilisées pour le calcul avec les données des déplacements.

4. Procédé selon une des revendications précédentes,
**caractérisé en ce que**
l'état des amortisseurs et/ou des ressorts de suspension de roue est déterminé à l'aide du décrément logarithmique.

5. Procédé selon une des revendications précédentes,
**caractérisé en ce que**
du fait de la conception du sol de l'aire de contrôle, le déplacement vertical est à large bande (par exemple excitation par chocs ou stochastique), ou à bande étroite (périodique).

6. Procédé selon une des revendications précédentes,
**caractérisé en ce que**
l'exploitation des données de mouvement est basée sur des déplacements relatifs ou absolus.

7. Procédé selon une des revendications précédentes,
**caractérisé en ce que**
dans le cas de la saisie de déplacements absolus, on utilise en même temps une règle graduée connue du système de mesure.

8. Procédé selon une des revendications précédentes,
**caractérisé en ce que**
selon le sens de déplacement de la carrosserie par rapport à la roue, on distingue une phase d'étirage et une phase de compression.

9. Procédé selon une des revendications précédentes,
**caractérisé en ce qu'**
en exploitant les données de déplacement de la ou des roues, dans un premier intervalle de temps faisant suite directement à l'excitation, on obtient une information sur la pression du pneumatique, et en exploitant comparativement entre elles les roues, on améliore l'information pour chaque roue individuelle.

10. Procédé selon une des revendications précédentes,
**caractérisé en ce que**
l'état des amortisseurs et/ou des ressorts de suspension de roue est déterminé à l'aide d'une fonction de transmission qui se calcule à partir du quotient des transformées de Laplace des déplacements de la carrosserie et de la roue.

11. Dispositif de vérification d'amortisseurs montés sur un véhicule, de ressorts de suspension de roue et/ou de pressions de pneumatiques pendant le passage sur le sol d'une aire de contrôle (5) équipée d'éléments de déviation verticale (6), au moyen d'un dispositif de mesure,
**caractérisé en ce que**
- le dispositif de mesure présente un dispositif optique avec au moins un appareil de prises de vues (2) fixe par rapport à l'aire de contrôle au moins pendant la mesure, ce dispositif pouvant saisir en même temps un mouvement de roue, au moins une partie de carrosserie avec un système de signes distinctifs de carrosserie (7) et une partie du sol de l'aire de contrôle (5), à plusieurs instants de mesure pendant le passage du véhicule sur le sol de l'aire de contrôle,
- le sol de l'aire de contrôle (5), dans la section qui est saisie, est équipé d'au moins un élément de déviation verticale (6) pour au moins une roue de véhicule, et les instants de mesure sont si rapprochés que pendant une déviation verticale ont lieu plusieurs prises de vues pour saisir le déplacement de la roue et celui de la carrosserie.

12. Dispositif de vérification selon la revendication 7,
**caractérisé en ce que**
sur la roue est posé au moins un signe distinctif (3) et le déplacement de la roue peut être déterminé par le dispositif de mesure à partir des trajectoires d'au moins un signe distinctif de la roue.

13. Dispositif de vérification selon la revendication 7 ou 8,
**caractérisé en ce que**
les éléments de déviation verticale (6) sur le sol de l'aire de contrôle (5) sont constitués et répartis de manière à obtenir une déviation verticale à bande étroite d'une roue, des deux roues d'un même essieu ou des quatre roues.

14. Dispositif de vérification selon la revendication 7 ou 8,
**caractérisé en ce que**
les éléments de déviation verticale (6) sur le sol de l'aire de contrôle (5) sont constitués et répartis de manière à obtenir une déviation verticale à bande large d'une roue, des deux roues d'un même essieu ou des quatre roues.

15. Dispositif de vérification selon une des revendications 7 à 10,
**caractérisé en ce que**
la disposition des éléments de déviation verticale (6) sur le sol de l'aire de contrôle (5) est mémorisée dans le dispositif de mesure et les données correspondant au parcours effectué et qui ont été saisies sur la base des signes distinctifs de carrosserie (4) ou de roue (3) peuvent être lues pour associer chaque déviation verticale au déplacement vertical de la roue et/ou au déplacement vertical de la carrosserie.

16. Dispositif de vérification selon une des revendications 7 à 10,
**caractérisé en ce que**
la disposition des éléments de déviation verticale (6) sur le sol de l'aire de contrôle (5) et la déviation verticale ainsi produite pendant le passage du véhicule sont saisies à partir des données d'image provenant du dispositif de prises de vues (2), et l'association de chaque déviation verticale au déplacement vertical de l'essieu de roue et/ou au déplacement vertical de la carrosserie est effectuée sur la base des données d'image saisies.
